# EUROPÄISCHE PATENTSCHRIFT

(11) **EP 4 028 659 B1**
(45) Veröffentlichungstag und Bekanntmachung des Hinweises auf die Patenterteilung: **29.04.2026**
(21) Anmeldenummer: 20768321.0
(22) Anmeldetag: 04.09.2020
(51) Int. Cl.: F02D 41/00, F02D 19/02, F02B 19/10, F02B 19/12, F02B 19/14, F02B 19/18, F02M 21/02

(54) **VERFAHREN ZUM BETREIBEN EINER BRENNKRAFTMASCHINE**
METHOD FOR OPERATING AN INTERNAL COMBUSTION ENGINE
PROCÉDÉ DE FONCTIONNEMENT D'UN MOTEUR À COMBUSTION INTERNE

(30) Priorität: 12.09.2019 DE 102019006486
(43) Veröffentlichungstag der Anmeldung: 20.07.2022
(73) Patentinhaber: MAN Truck & Bus SE, 80995 München (DE)
(72) Erfinder: MALISCHEWSKI, Thomas, 80995 München (DE); BARCIELA DÍAZ-BLANCO, Bruno, 80995 München (DE)
(74) Vertreter: v. Bezold & Partner Patentanwälte - PartG mbB
(86) Internationale Anmeldenummer: PCT/EP2020/074815
(87) Internationale Veröffentlichungsnummer: WO 2021/048024

(56) Entgegenhaltungen:
- EP-A1- 2 998 539
- WO-A1-2018/141589
- AT-U1- 6 290
- DE-A1- 102007 060 560
- DE-A1- 102015 202 193
- DE-C2- 4 419 429
- JP-A- 2018 066 369
- US-B2- 9 890 689

## Beschreibung

Die Erfindung betrifft ein Verfahren zum Betreiben einer Brennkraftmaschine, vorzugsweise einer Einkraftstoff-Brennkraftmaschine, mit einem Gaskraftstoff. Die Erfindung betrifft ferner eine Brennkraftmaschine und ein Kraftfahrzeug mit einer Brennkraftmaschine.

Zum Betreiben einer Gaskraftstoff-Brennkraftmaschine kann das sogenannte HPDI-Verfahren (High Pressure Direct Injection) verwendet werden. Bei diesem Brennverfahren werden Methan als Gaskraftstoff und Diesel als Flüssigkraftstoff benötigt. Hierbei können das Methan und der Diesel getrennt in einem Injektor geführt sein. Zuerst wird eine Pilotmasse von ca. 3 mg bis 10 mg Diesel im Bereich des oberen Totpunktes eingespritzt. Aufgrund der Eigenschaften des Diesels (geringe Zündtemperaturen) findet eine sofortige Verbrennung statt. Hierdurch erfolgt eine lokale, deutliche Temperaturerhöhung. Im zweiten Schritt wird dann die Hauptmenge an Methan eingespritzt. Durch die vorherige Temperaturerhöhung findet auch eine sofortige Verbrennung des Methans statt.

Nachteilig an diesem Verfahren kann der weiterhin benötigte Dieselkraftstoff sein, durch den die Systemkomplexität deutlich ansteigt und nicht das volle CO2-Einsparpotential gehoben werden kann.

Aus der DE 44 19 429 C2 ist ein Verfahren zum Betreiben einer selbstzündenden gemischverdichtenden Brennkraftmaschine, mit einem gasförmigen Brennstoff, welcher einer Vorkammer zugeführt wird und dort ein brennstoffreiches Gemisch bildet, und mit einem Hauptbrennraum, in welchem ein gasförmiges Brennstoff/Luft-Gemisch angesaugt wird, bekannt. Der gasförmige Brennstoff wird bei einem Druck in die Vorkammer eingeblasen, der über dem Verdichtungsenddruck im Hauptbrennraum liegt. Das gasförmiges Brennstoff/Luft-Gemisch für die Hauptbrennkammer wird über eine Niederdruck-Brenngasleitung in einen Einlasskanal stromaufwärts der Hauptbrennkammer zugeführt.

Eine weitere gasbetriebene Brennkraftmaschine mit einer Vorkammer ist aus der US 2 799 255 bekannt.

Das Dokument JP 2018066369 A offenbart einen Viertakt-Gasmotor, umfassend eine Hauptkammer, eine Unterkammer, die von der Hauptkammer durch ein Abschottungselement getrennt ist und ein kleineres Fassungsvermögen als die Hauptkammer hat. Der Viertakt-Gasmotor umfasst ferner Verbindungslöcher, die an dem Abschottungselement angebracht sind und die Hauptkammer und die Unterkammer verbinden, eine Einspritzdüse, die gasförmigen Kraftstoff in die Unterkammer einspritzt, und eine Zündkerze, die in der Unterkammer angeordnet ist.

Das Dokument AT 006 290 U1 betrifft ein Verfahren zum Betreiben einer mit gasförmigem Kraftstoff betriebenen Brennkraftmaschine. wobei zumindest in einem Motorbetriebsbereich die Verbrennung des in einen Hauptbrennraum eingebrachten Brenngas/Luftgemisches durch Entzündung eines zündfähigen Kraftstoff/Luftgemisches in einer Vorkammer eingeleitet wird.

Das Dokument US 9 890 689 B2 beschreibt einen Motor mit innerer Verbrennung, bei dem gasförmiger Kraftstoff bei einer ersten Einspritzung durch eine Vorbrennkammer in den Brennraum eingespritzt wird, um sich mit der Luft im Brennraum zu vermischen. Die Vorbrennkammer hat eine Düsenöffnung, die in Fluidverbindung zwischen der Vorbrennkammer und dem Brennraum steht. Das Gemisch aus gasförmigem Kraftstoff und Luft wird dann aus der Brennkammer in die Vorbrennkammer eingesaugt und gezündet. Bei einer zweiten Einspritzung wird gasförmiger Brennstoff in die Vorbrennkammer eingespritzt. Mit der zweiten Einspritzung werden gezündeter gasförmiger Brennstoff und Luft aus der Vorbrennkammer durch die Düsenöffnung und in die Brennkammer als flammender Strahl mit einem Kern aus gasförmigem Brennstoff ausgestoßen.Der Erfindung liegt die Aufgabe zu Grunde, eine alternative und/oder verbesserte Technik zum Betreiben einer Brennkraftmaschine mit einem Gaskraftstoff zu schaffen.

Die Aufgabe wird gelöst durch die Merkmale des Hauptanspruchs. Vorteilhafte Weiterbildungen sind in den abhängigen Ansprüchen und der Beschreibung angegeben.

Gemäß einem Aspekt ist die vorliegende Offenbarung auf ein Verfahren zum Betreiben einer Brennkraftmaschine, vorzugsweise einer Einkraftstoff-Brennkraftmaschine, aufweisend eine Hauptbrennkammer und eine Vorkammer, die in Fluidverbindung sind, gerichtet. Das Verfahren weist ein Zuführen (z. B. Einblasen) einer Hauptmenge von Gaskraftstoff, vorzugsweise Methan oder Erdgas, über die Vorkammer in die Hauptbrennkammer auf. Das Verfahren weist ein Verdichten und Vermischen von (z. B. verdichtete Lade-) Luft und der Hauptmenge von Gaskraftstoff zu einem Luft-Gaskraftstoffgemisch während einer Bewegung eines Kolbens in der Hauptbrennkammer zu einem oberen Totpunkt einer Kolbenbewegung des Kolbens auf (z. B. im Verdichtungstakt). Das Verfahren weist ein Zuführen (z. B. Einblasen) einer Zündmenge von Gaskraftstoff, vorzugsweise Methan oder Erdgas, in die Vorkammer, bevor der Kolben den oberen Totpunkt erreicht, zum Bilden eines Luft-Gaskraftstoffgemischs in der Vorkammer, das fetter ist als in der Hauptbrennkammer, auf. Das Verfahren weist ein Selbstzünden des Luft-Gaskraftstoffgemischs in der Vorkammer und ein Zünden des Luft-Gaskraftstoffgemischs in der Hauptbrennkammer durch das selbstgezündete Luft-Gaskraftstoffgemisch in der Vorkammer auf.

Die Erfindung ermöglicht es, eine Brennkraftmaschine rein mit Methan oder einem anderen gasförmigen Kraftstoff zu betreiben, und zwar mittels Kompressionsselbstzündung der Zündmenge. Es wird kein Dieselkraftstoff o.Ä. wie beim HPDI-Verfahren zum Zünden des Gaskraftstoffs benötigt. Die Selbstzündung der Zündmenge führt zu einer Zündung der zuvor zugeführten Hauptmenge von Gaskraftstoff. Die Hauptverbrennung selbst kann einem Dieselbrennverfahren entsprechen oder ähnlich dazu sein. Außerdem ermöglicht das Verfahren einen vergleichsweise einfachen Aufbau, da bspw. dieselbe Gaskraftstoffzufuhrleitung und/oder derselbe Kraftstoffinjektor zur Zuführung der Hauptmenge und der Zündmenge von Gaskraftstoff verwendet werden kann. Dadurch kann die Systemkomplexität nochmals deutlich verringert werden. Eine Magerverbrennung des Luft-Gaskraftstoffgemischs in der Hauptbrennkammer kann übermäßige Stickoxidemissionen verhindern, insbesondere unter Teillast der Brennkraftmaschine.

In einem Ausführungsbeispiel werden die Luft und die Hauptmenge von Gaskraftstoff während des Verdichtens zu einem homogenen Luft-Kraftstoffgemisch in der Hauptbrennkammer vermischt. Somit kann die Brennkraftmaschine durch eine homogene Magerverbrennung des Gaskraftstoffs angetrieben werden.

In einer Weiterbildung weist das homogene Luft-Gaskraftstoffgemisch ein Verbrennungsluftverhältnis (λ) ≥ 2 und/oder ≤ 3 auf. Vorzugsweise kann so eine Selbstzündung des Luft-Gaskraftstoffgemischs in der Hauptbrennkammer verhindert werden.

In einem weiteren Ausführungsbeispiel weist das homogene Luft-Gaskraftstoffgemisch ein Verbrennungsluftverhältnis auf, das zu keiner Selbstzündung des Luft-Gaskraftstoffgemischs in der Hauptbrennkammer führt. In einem weiteren Ausführungsbeispiel weist das Verfahren ferner ein Verdichten eines Teils des Luft-Gaskraftstoffgemischs aus der Hauptbrennkammer in die Vorkammer hinein während der Bewegung des Kolbens zu dem oberen Totpunkt auf, vorzugsweise nach dem Zuführen der Hauptmenge von Gaskraftstoff. Es ist möglich, dass die Zündmenge in den Teil des in die Vorkammer hineinverdichteten Luft-Gaskraftstoffgemischs zugeführt wird. Somit kann auf zuverlässige Weise ein fetteres und selbstzündungsfähiges Luft-Gaskraftstoffgemisch in der Vorkammer gebildet werden.

In einem weiteren Ausführungsbeispiel weist das fettere Luft-Gaskraftstoffgemisch in der Vorkammer ein Verbrennungsluftverhältnis (λ) zwischen 0.8 und 1.5, vorzugsweise von ca. 1, auf. Vorzugsweise kann so eine Selbstzündung des fetteren Luft-Gaskraftstoffgemischs in der Vorkammer ermöglicht werden.

In einer Ausführungsform weist das fettere Luft-Gaskraftstoffgemisch in der Vorkammer ein Verbrennungsluftverhältnis (λ) auf, das zu einer Selbstzündung des fetteren Luft-Gaskraftstoffgemischs in der Vorkammer führt.

Die Hauptmenge von Gaskraftstoff entspricht zwischen 90 % und 98 % einer pro Verbrennungszyklus insgesamt zugeführten Gaskraftstoffmenge. Erfindungsgemäß entspricht die Zündmenge von Gaskraftstoff zwischen 2 % und 10 % einer pro Verbrennungszyklus insgesamt zugeführten Gaskraftstoffmenge. Es wurde herausgefunden, dass diese Kleinstmenge von Gaskraftstoff ausreichend ist, um eine sichere Selbstzündung zu gewährleisten. Es summieren sich die Hauptmenge von Gaskraftstoff und die Zündmenge von Gaskraftstoff auf 100 % einer pro Verbrennungszyklus insgesamt zugeführten Gaskraftstoffmenge.

In einer weiterem Ausführungsform ist ein effektiver Mitteldruck des Verfahrens ≤ 10 bar, vorzugsweise ≤ 9 bar, besonders bevorzugt ≤ 8 bar. Vorzugsweise kann so eine Selbstzündung des Luft-Gaskraftstoffgemischs in der Hauptbrennkammer verhindert werden.

In einer weiterem Ausführungsform ist ein effektiver Mitteldruck des Verfahrens so (z. B. eingestellt oder gesteuert), dass er zu keiner Selbstzündung des Luft-Gaskraftstoffgemischs in der Hauptbrennkammer führt.

Bevorzugt kann sich der effektive Mitteldruck als Quotient aus abgegebener Arbeit (an der Kurbelwelle) und Hubraum der Hauptbrennkammer(n) berechnen lassen.

In einer weiterem Ausführungsform wird die Zündmenge von Gaskraftstoff im Bereich des oberen Totpunkts der Kolbenbewegung zugeführt, vorzugsweise kurz vor Erreichen des oberen Totpunkts und/oder in einem Bereich zwischen 50 °KW und 0°KW, vorzugsweise zwischen 30°KW und 15°KW, vor dem oberen Totpunkt.

In einer Ausführungsvariante weisen die Hauptmenge und die Zündmenge den gleichen Gaskraftstoff, vorzugsweise Methan oder Erdgas, auf.

In einer weiteren Ausführungsvariante wird die Hauptmenge von Gaskraftstoff während eines Einlasstaktes und/oder eines Verdichtungstaktes zugeführt, vorzugsweise bis maximal 100°KW vor dem oberen Totpunkt der Kolbenbewegung des Kolbens. So kann sichergestellt werden, dass das Luft-Gaskraftstoffgemisch aus der Hauptbrennkammer in die Vorkammer hineinverdichtet/hineingeschoben werden kann, um dort mit der Zündmenge von Gaskraftstoff ein selbstzündfähiges Gemisch zu bilden.

In einer weiteren Ausführungsvariante weist das Verfahren ferner ein Zuführen von (z. B. verdichteter Lade-) Luft, in die Hauptbrennkammer auf, vorzugsweise während eines Einlasstaktes. Beispielsweise kann die Luft über einen Einlasskanal eines Zylinderkopfes, der in die Hauptbrennkammer mündet, zugeführt werden. Zweckmäßig kann die Luft vor dem Zuführen mittels eines Verdichters z. B. einer Turboladerbaugruppe verdichtet werden.

In einem Ausführungsbeispiel erfolgt das Zuführen der Zündmenge und/oder das Zuführen der Hauptmenge gasförmig.

In einem weiteren Ausführungsbeispiel wird die Hauptmenge zeitlich vor und/oder beabstandet zu der Zündmenge zugeführt. So kann beispielsweise sichergestellt werden, dass das Luft-Gaskraftstoffgemisch aus der Hauptbrennkammer in die Vorkammer hineinverdichtet/hineingeschoben werden kann, um dort mit der Zündmenge von Gaskraftstoff ein selbstzündfähiges Luft-Gaskraftstoffgemisch zu bilden.

In einem weiteren Ausführungsbeispiel erfolgt das Zuführen der Zündmenge und das Zuführen der Hauptmenge durch denselben Kraftstoffinjektor, vorzugsweise durch dieselbe Zufuhrleitung desselben Kraftstoffinjektors.

In einem weiteren Ausführungsbeispiel erfolgen das Zuführen der Zündmenge und das Zuführen der Hauptmenge mit demselben Zufuhrdruck.

Vorzugsweise erfolgt das Zuführen der Hauptmenge und/oder der Zündmenge mittels eines Kraftstoffinjektors, der bevorzugt direkt in die Vorkammer mündet.

In einer Ausführungsform erfolgt das Zuführen der Zündmenge und/oder das Zuführen der Hauptmenge durch einen Piezo-Kraftstoffinjektor oder durch einen mittels eines Elektromagneten betätigten Kraftstoffinjektor.

In einer weiteren Ausführungsform weist eine Innenseitenfläche der Vorkammer einen thermischen Isolator auf, vorzugsweise in Form einer thermisch isolierenden Beschichtung. Der thermische Isolator kann einen Wärmeübergang zwischen einer Wand der Vorkammer und dem Gaskraftstoff minimieren.

In einer weiteren Ausführungsform wird der Schritt des Selbstzündens des Luft-Gaskraftstoffgemischs in der Vorkammer zumindest während eines Normalbetriebs der Brennkraftmaschine durchgeführt (zum Beispiel im Leerlauf, unter Teillast und/oder unter Volllast), vorzugsweise ohne Einsatz von Selbstzündunterstützungseinrichtungen wie einer Glühkerze usw.

In einer Ausführungsvariante weist das Verfahren ferner ein Fremdzünden des Luft-Gaskraftstoffgemischs in der Vorkammer durch eine Zündkerze bei einem Kaltstart der Brennkraftmaschine und/oder ein Vorheizen der Vorkammer durch eine Glühkerze und Selbstzünden der des Luft-Gaskraftstoffgemisch in der vorgeheizten Vorkammer bei einem Kaltstart der Brennkraftmaschine auf. So kann, wenn gewünscht oder erforderlich, auch unter Kaltstartbedingungen eine sichere Zündung des Gaskraftstoffs gewährleistet werden.

In einem Ausführungsbeispiel weist die Vorkammer ein Volumen in einem Bereich zwischen ca. 0,5 cm³ und ca. 2 cm³ auf. Ein derartig geringes Volumen kann ausreichend sein, um die sehr geringe Pilotmenge von Gaskraftstoff zusammen mit der verdichteten Luft sicher zum Selbstzünden zu bringen.

In einem weiteren Ausführungsbeispiel ist die Vorkammer durch eine oder mehrere Durchgangsöffnungen, vorzugweise 6 bis 14 verteilt angeordnete Durchgangsöffnungen, mit der Hauptbrennkammer verbunden.

In einem weiteren Ausführungsbeispiel ist die Vorkammer in einem Kraftstoffinjektor für die Zündmenge und/oder die Hauptmenge integriert, oder die Vorkammer ist separat zu einem Kraftstoffinjektor für die Zündmenge und/oder die Hauptmenge ausgebildet.

Beispielsweise kann bei getrennter Ausbildung von Vorkammer und Kraftstoffinjektor die Vorkammer zumindest teilweise durch einen Zylinderkopf der Brennkraftmaschine, durch ein an der Brennraumseite eines Zylinderkopfes der Brennkraftmaschine angebrachtes Kappenelement und/oder durch eine Montagehülse für den Kraftstoffinjektor gebildet sein. Bei Verwendung des Kappenelements kann dieses bspw. von unten in die Montagehülse eingeschraubt sein.

In einer Ausführungsform ist die Vorkammer zentral bezüglich der Hauptbrennkammer angeordnet.

Die Erfindung betrifft auch ein Kraftfahrzeug, vorzugsweise ein Nutzfahrzeug (zum Beispiel Lastkraftwagen oder Omnibus), mit einer Brennkraftmaschine, die zum Ausführen eines Verfahrens wie hierin offenbart ausgeführt ist.

Zweckmäßig kann die Brennkraftmaschine eine vorzugsweise elektronische Steuereinheit aufweisen, die zum Ausführen des Verfahrens eingerichtet ist, z. B. einen Kraftstoffinjektor der Brennkraftmaschine entsprechend steuert.

Vorzugsweise kann sich der Begriff "Steuereinheit" auf eine Elektronik (z. B. mit Mikroprozessor(en) und Datenspeicher) beziehen, die je nach Ausbildung Steuerungsaufgaben und/oder Regelungsaufgaben übernehmen kann. Auch wenn hierin der Begriff "Steuern" verwendet wird, kann damit gleichsam zweckmäßig auch "Regeln" bzw. "Steuern mit Rückkopplung" umfasst sein.

Es ist auch möglich, das Verfahren und die Vorrichtung wie hierin offenbart für Personenkraftwagen, Großmotoren, geländegängige Fahrzeuge, stationäre Motoren, Marinemotoren usw. zu verwenden.

Die zuvor beschriebenen bevorzugten Ausführungsformen und Merkmale der Erfindung sind beliebig miteinander kombinierbar. Weitere Einzelheiten und Vorteile der Erfindung werden im Folgenden unter Bezug auf die beigefügten Zeichnungen beschrieben. Es zeigen:
- Figur 1: eine schematische Darstellung einer Brennkraftmaschine gemäß einem Ausführungsbeispiel der vorliegenden Offenbarung; und
- Figur 2: eine Schnittansicht durch einen beispielhaften Zylinderkopf.

Die in den Figuren gezeigten Ausführungsformen stimmen zumindest teilweise überein, so dass ähnliche oder identische Teile mit den gleichen Bezugszeichen versehen sind und zu deren Erläuterung auch auf die Beschreibung der anderen Ausführungsformen bzw. Figuren verwiesen wird, um Wiederholungen zu vermeiden.

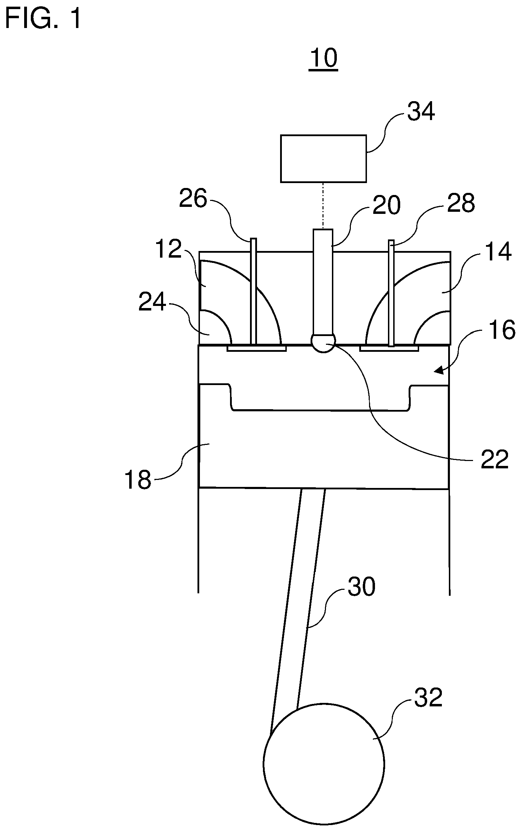

Die Figur 1 zeigt eine Brennkraftmaschine 10. Die Brennkraftmaschine 10 ist als eine Hubkolben-Brennkraftmaschine ausgeführt. Zweckmäßig ist die Brennkraftmaschine 10 als eine Viertakt-Brennkraftmaschine ausgeführt. Die Brennkraftmaschine 10 weist einen oder mehrere Zylinder auf. Zur Verbesserung der Übersichtlichkeit ist lediglich ein Zylinder in Figur 1 dargestellt. Die Brennkraftmaschine 10 ist besonders bevorzugt als eine Einkraftstoff-Brennkraftmaschine zum Betreiben mittels Methan (Erdgas) als einzigen Kraftstoff ausgeführt. Die Brennkraftmaschine 10 kann allerdings bspw. auch mit einem anderen gasförmigen Kraftstoff betrieben werden, z. B. Wasserstoff.

Die Brennkraftmaschine 10 kann in einem Fahrzeug, z. B. einem Kraftfahrzeug, einem Schienenfahrzeug oder einem Wasserfahrzeug, zum Antreiben des Fahrzeugs umfasst sein. Vorzugsweise ist die Brennkraftmaschine 10 in einem Nutzfahrzeug, z. B. einem Lastkraftwagen oder Omnibus, zum Antreiben des Nutzfahrzeugs umfasst. Es ist auch möglich, die Brennkraftmaschine 10 in einer stationären Anlage z. B. zum Antreiben eines Generators zu verwenden.

Die Brennkraftmaschine 10 kann je Zylinder mindestens einen Lufteinlasskanal 12, mindestens einen Abgasauslasskanal 14, eine Hauptbrennkammer 16, einen Kolben 18, einen Kraftstoffinjektor 20, eine (z. B. einzige) Vorkammer (Vorbrennkammer) 22 und einen Zylinderkopf 24 aufweisen.

Der Lufteinlasskanal 12 mündet in die Hauptbrennkammer 16. Über den Lufteinlasskanal 12 kann (Lade-)Luft zu der Hauptbrennkammer 16 zugeführt werden. Der Lufteinlasskanal 12 ist in dem Zylinderkopf 24 angeordnet. Der Zylinderkopf 24 begrenzt die Hauptbrennkammer 16 von oben. Stromaufwärts des Lufteinlasskanals 12 kann ein Luftzuführsystem angeordnet sein. Das Luftzuführsystem kann je nach Anforderung bspw. einen oder mehrere Verdichter einer Turboladerbaugruppe, einen Ladeluftkühler und/oder eine Abgasrückrührleitung aufweisen.

Eine Mündungsöffnung des Lufteinlasskanals 12 in die Hauptbrennkammer 16 ist mittels eines Lufteinlassventils 26 zu öffnen und zu schließen. Das Lufteinlassventil 26 ist vorzugsweise als ein Tellerventil ausgeführt. Das Lufteinlassventil 26 kann mittels jeglicher Technik betätigt werden, z. B mittels eines zweckmäßig variablen Ventiltriebs.

Nach der Verbrennung verlässt das Abgas die Hauptbrennkammer 16 durch den mittels eines Abgasauslassventils 28 geöffneten Abgasauslasskanal 14. Das Abgasauslassventil 28 kann bspw. als ein Tellerventil ausgeführt sein. Der Abgasauslasskanal 14 ist in dem Zylinderkopf 24 angeordnet. Stromabwärts des Abgasauslasskanals 14 kann ein Abgassystem angeordnet sein. Das Abgassystem kann bspw. eine oder mehrere Abgasturbinen einer Turboladerbaugruppe und/oder mindestens eine Abgasnachbehandlungsvorrichtung aufweisen. Das Abgasauslassventil 28 kann mittels jeglicher Technik betätigt werden, z. B mittels eines zweckmäßig variablen Ventiltriebs.

Der Kolben 18 ist hin- und her bewegbar in dem Zylinder angeordnet. Der Kolben 18 ist über einen Pleuel 30 mit einer Kurbelwelle 32 verbunden. Der Kolben 18 begrenzt die Hauptbrennkammer 16 nach unten. Der Kolben 18 kann Luft oder eine Luft-Kraftstoff-Gemisch in der Hauptbrennkammer 16 bei seiner Bewegung vom unteren Totpunkt zum oberen Totpunkt verdichten.

Der Kraftstoffinjektor 20 ist als ein Gaskraftstoff-Injektor, vorzugsweise ein Methan/Erdgas-Injektor, ausgebildet. Der Kraftstoffinjektor 20 ist als ein Einkraftstoff-Injektor zum Führen eines einzigen Gaskraftstoffs ausgebildet. Der Kraftstoffinjektor 20 ist so angeordnet oder ausgeführt, dass Gaskraftstoff in die Vorkammer 22 zugeführt wird. Vorzugsweise bläst der Kraftstoffinjektor 20 den Gaskraftstoff gasförmig direkt in die Vorkammer 22 ein. Der Kraftstoffinjektor 20 ist zweckmäßig zentral bezüglich der Hauptbrennkammer 16 angeordnet.

Die Zuführung durch den Kraftstoffinjektor 20 erfolgt zweckmäßig mit einem hohen Druck, zum Beispiel in einem Bereich zwischen 200 bar und 600 bar. Bspw. kann der Kraftstoffinjektor 20 mit einem Gaskraftstoff-Common-Rail fluidisch verbunden sein. Das Gaskraftstoff-Common-Rail kann Gaskraftstoff zu dem Kraftstoffinjektor 20 zuführen.

Der Kraftstoffinjektor 20 ist dazu ausgebildet, eine Zündmenge und eine Hauptmenge von Gaskraftstoff zu unterschiedlichen Zeitpunkten in die Vorkammer 22 zuzuführen. Der Kraftstoffinjektor 20 kann auf jegliche Art und Weise betätigt sein. Um auch ein Zuführen von Kleinstmengen von Gaskraftstoff zu ermöglichen, ist der Kraftstoffinjektor 20 vorzugsweise ein Piezo-Kraftstoffinjektor, der mittels eines Piezoelements betätigbar ist. Z. B. kann sich eine Verschlussnadel des Kraftstoffinjektors 20 in Abhängigkeit von einem Zustand eines Piezoelements bzw. Piezokristalls des Kraftstoffinjektors 20 heben oder senken. Es ist bspw. auch möglich, dass der Kraftstoffinjektor 20 mittels eines Elektromagneten betätigbar ist. Zweckmäßig ist eine Betätigung des Kraftstoffinjektors 20 durch eine elektronische Steuereinheit 34 gesteuert.

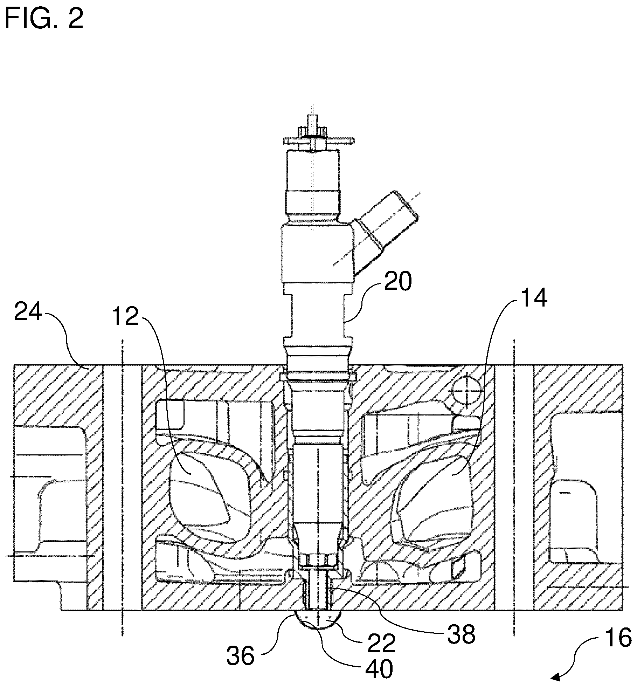

Die Vorkammer 22 kann in dem Kraftstoffinjektor 20 integriert sein, wie in Figur 1 angedeutet ist. Es ist allerdings auch möglich, die Vorkammer 22 separat zu dem Kraftstoffinjektor 20 auszubilden, wie in Figur 2 dargestellt ist. Der Kraftstoffinjektor 20 kann dann bspw. direkt in die Vorkammer 22 münden. Bei getrennter Ausbildung von Vorkammer 22 und Kraftstoffinjektor 20 kann die Vorkammer 22 z. B. zumindest teilweise durch den Zylinderkopf 24, durch ein an der Brennraumseite des Zylinderkopfes 24 angebrachtes Kappenelement 36 (siehe Figur 2) und/oder durch eine Montagehülse 38 (siehe Figur 2) für den Kraftstoffinjektor 20 gebildet sein. Bei Verwendung des Kappenelements 36 kann dieses bspw. von unten in die Montagehülse 38 eingeschraubt sein.

Die Vorkammer 22 kann bspw. ein kugeliges, domförmiges oder abgerundetes Innenvolumen aufweisen. Der Gaskraftstoff ist mittels des Kraftstoffinjektors 20 in das Innenvolumen zuführbar. Das Innenvolumen kann zweckmäßig in einem Bereich zwischen 0,5 cm³ und 2,5 cm³ liegen.

Die Vorkammer 22 ist über mehrere Durchgangsöffnungen (Überströmöffnungen) mit der Hauptbrennkammer 16 in Fluidverbindung. Die Durchgangsöffnungen sind zweckmäßig symmetrisch verteilt um einen Umfang der Vorkammer 22 verteilt angeordnet. Bspw. sind sechs bis vierzehn Durchgangsöffnungen umfasst.

Es ist möglich, dass eine Innenseitenfläche der Vorkammer 22 einen thermischen Isolator 40 aufweist. Der thermische Isolator 40 kann zweckmäßig als eine Beschichtung der Innenseitenfläche ausgeführt sein. Bspw. kann der thermische Isolator 40 aus einem keramischen Material bestehen. Es ist möglich, dass der thermische Isolator 40 bspw. auf die Innenseitenfläche aufgedampft ist, mittels Plasmaauftragen auf die Innenseitenfläche aufgetragen ist oder mittels eines Spritzverfahrens auf die Innenseitenfläche aufgespritzt ist. Der thermische Isolator 40 kann ein Kühlen von Gaskraftstoff in der Vorkammer 22 durch Wände der Vorkammer 22 verhindern oder zumindest verringern.

In einem Einlasstakt wird (Verbrennungs-)Luft durch den Lufteinlasskanal 12 und das geöffnete Lufteinlassventil 26 in die Hauptbrennkammer 16 zugeführt. Der Kolben 18 bewegt sich vom oberen Totpunkt zum unteren Totpunkt.

In Einlass- und/oder Verdichtungstakt wird eine Hauptmenge von Gaskraftstoff über den Kraftstoffinjektor 20 in die Vorkammer 22 zugeführt, vorzugsweise eingeblasen. Bevorzugt wird der Gaskraftstoff nicht länger als bis zu 100°KW vor OT im Verdichtungstakt zugeführt.

Die Hauptmenge von Gaskraftstoff wird mit einem Druck in die Vorkammer 22 eingeblasen, der höher als ein Druck in der Vorkammer 22 und der Hauptbrennkammer 16 ist, z. B. höher als ein Verdichtungsenddruck der Brennkraftmaschine 10. Bevorzugt entspricht die Hauptmenge von Gaskraftstoff zwischen rund 90 % und rund 98 % einer während eines (einzigen) Verbrennungszyklus (bestehend aus Einlass-, Verdichtungs-, Expansions- und Auslastakt) insgesamt zugeführten Gaskraftstoffmenge.

Die Hauptmenge von Gaskraftstoff strömt während des Einlass- und/oder Verdichtungstaktes über die Durchgangsöffnungen aus der Vorkammer 22 in die Hauptbrennkammer 16. Die Hauptmenge von Gaskraftstoff vermischt sich mit der zugeführten Luft in der Hauptbrennkammer 16 zu einem Luft-Gaskraftstoffgemisch. Während des Verdichtungstaktes / einer Kolbenbewegung des Kolbens 18 vom unteren Totpunkt zum oberen Totpunkt wird das Luft-Gaskraftstoffgemisch zu einem homogenen Gemisch verdichtet, z. B. aufgrund der Gasbewegungen in der Hauptbrennkammer 16.

Damit es zu keiner ungewünschten Selbstzündung in der Hauptbrennkammer kommt, sollte das Verfahren vorzugsweise nur bei vergleichsweise niedrigen effektiven Mitteldrücken angewendet werden. Hierbei kann das homogene Gemisch ein Verbrennungsluftverhältnis (λ) zwischen ca. 2 und ca. 3 erreichen. Aus thermodynamischer Sicht kann das Verfahren somit bevorzugt bis zu einem effektiven Mitteldruck von ca. 10 bar, vorzugsweise ca. 9 bar, besonders bevorzugt ca. 8 bar oder kleiner, angewendet werden. So kann das Verfahren beispielsweise durchgeführt werden, ohne dass das Verbrennungsluftverhältnis (λ) für das Luft-Gaskraftstoffgemisch in der Hauptbrennkammer 16 unter Werte von ca. 2 sinkt.

Das Luft-Gaskraftstoffgemisch wird, nachdem die Zuführung der Hauptmenge von Gaskraftstoff in die Vorkammer 22 beendet ist, während des Verdichtungstaktes über die Durchgangsöffnungen aus der Hauptbrennkammer 16 in die Vorkammer 22 hineinverdichtet bzw. geschoben.

Zum Ende des Verdichtungstaktes, bevor der Kolben 18 den oberen Totpunkt erreicht, wird eine Zündmenge von Gaskraftstoff in die Vorkammer 22 zugeführt, vorzugsweise eingeblasen und/oder unter hohem Druck zugeführt. Die Zuführung erfolgt vorzugweise zwischen 30°KW und 15°KW vor dem oberen Totpunkt. Die Zuführzeitdauer für die Zündmenge kann vergleichsweise gering sein, z. B. nur 50 µs bis 200 µs.

Die Zündmenge von Gaskraftstoff wird vorzugsweise mittels desselben Kraftstoffinjektors 20 zugeführt wie die Hauptmenge. Bevorzugt entspricht die Zündmenge von Gaskraftstoff zwischen rund 2 % und rund 10 % einer während eines (einzigen) Verbrennungszyklus insgesamt zugeführten Gaskraftstoffmenge. Die Hauptmenge und die Zündmenge summieren sich zweckmäßig auf 100 %. Beispielsweise kann zwischen 0,5 mg und 3 mg Gaskraftstoff als Zündmenge zugeführt werden.

In der Vorkammer 22 bildet sich durch die Zuführung der Zündmenge in das Luft-Gaskraftstoffgemisch in der Vorkammer 22 ein Luft-Gaskraftstoffgemisch, dass fetter und zündfreudiger ist als das Luft-Gaskraftstoffgemisch in der Hauptbrennkammer 16. Vorzugsweise wird durch die Zuführung der Zündmenge in der Vorkammer ein Verbrennungsluftverhältnis (λ) zwischen 0.8 und 1.5, vorzugsweise von ca. 1, in der Vorkammer 22 erreicht. Zumindest im Normalbetrieb der Brennkraftmaschine 10 zündet dieses fettere Luft-Gaskraftstoffgemisch in der Vorkammer 22 selbst. Eine dabei entstehende Flammenfront breitet sich aus der Vorkammer 22 durch die Durchgangsöffnungen in die Hauptbrennkammer 16 aus und zündet dort das magerere, homogene Luft-Gaskraftstoffgemisch. Die folgende homogene Magerverbrennung in der Hauptbrennkammer 16 ermöglicht eine deutliche Reduzierung der Stickoxidemissionen, insbesondere unter Teillast der Brennkraftmaschine 10.

Es ist möglich, dass unter Kaltstartbedingungen der Brennkraftmaschine 10 eine unterstütze Selbst- oder Fremdzündung des Gaskraftstoffs bewirkt wird. Die Selbstzündung der Zündmenge kann bspw. durch eine Glühkerze, die in die Vorkammer 22 ragt, unterstützt werden. Es kann auch eine Fremdzündung durch eine Zündkerze, die in die Vorkammer 22 ragt, bewirkt werden. Die Glühkerze oder Zündkerze wird vorzugsweise nur unter Kaltstartbedingungen der Brennkraftmaschine 10 verwendet.

Die Erfindung ist nicht auf die vorstehend beschriebenen bevorzugten Ausführungsbeispiele beschränkt. Vielmehr ist eine Vielzahl von Varianten und Abwandlungen möglich, die ebenfalls von dem Erfindungsgedanken Gebrauch machen und deshalb in den Schutzbereich fallen. Der Schutzumfang ist durch die beigefügten Ansprüche definiert. Alle Bereichsangaben hierin sind derart offenbart zu verstehen, dass gleichsam alle in den jeweiligen Bereich fallenden Werte einzeln offenbart sind, z. B. auch als jeweils bevorzugte engere Außengrenzen des jeweiligen Bereichs.

### Bezugszeichenliste

- 10: Brennkraftmaschine
- 12: Lufteinlasskanal
- 14: Abgasauslasskanal
- 16: Hauptbrennkammer
- 18: Kolben
- 20: Kraftstoffinjektor
- 22: Vorkammer (Vorbrennkammer)
- 24: Zylinderkopf
- 26: Lufteinlassventil
- 28: Abgasauslassventil
- 30: Pleuel
- 32: Kurbelwelle
- 34: Steuereinheit
- 36: Kappenelement
- 38: Montagehülse
- 40: Thermischer Isolator

## Patentansprüche

1. Verfahren zum Betreiben einer Brennkraftmaschine (10), vorzugsweise einer Einkraftstoff-Brennkraftmaschine, aufweisend eine Hauptbrennkammer (16) und eine Vorkammer (22), die in Fluidverbindung sind, wobei das Verfahren aufweist:
Zuführen einer Hauptmenge von Gaskraftstoff, vorzugsweise Methan oder Erdgas, über die Vorkammer (22) in die Hauptbrennkammer (16);
Verdichten und Vermischen von Luft und der Hauptmenge von Gaskraftstoff zu einem Luft-Gaskraftstoffgemisch während einer Bewegung eines Kolbens (18) in der Hauptbrennkammer (16) zu einem oberen Totpunkt einer Kolbenbewegung des Kolbens (18);
Zuführen einer Zündmenge von Gaskraftstoff, vorzugsweise Methan oder Erdgas, in die Vorkammer (22), bevor der Kolben (18) den oberen Totpunkt erreicht, zum Bilden eines Luft-Gaskraftstoffgemischs in der Vorkammer (22), das fetter ist als in der Hauptbrennkammer (16), wobei die Hauptmenge von Gaskraftstoff zwischen 90 % und 98 % einer pro Verbrennungszyklus insgesamt zugeführten Gaskraftstoffmenge entspricht und die Zündmenge von Gaskraftstoff zwischen 2 % und 10 % einer pro Verbrennungszyklus insgesamt zugeführten Gaskraftstoffmenge entspricht;
Selbstzünden des Luft-Gaskraftstoffgemischs in der Vorkammer (22); und
Zünden des Luft-Gaskraftstoffgemischs in der Hauptbrennkammer (16) durch das selbstgezündete Luft-Gaskraftstoffgemisch in der Vorkammer (22).

2. Verfahren nach Anspruch 1, wobei:
die Luft und die Hauptmenge von Gaskraftstoff während des Verdichtens zu einem homogenen Luft-Kraftstoffgemisch in der Hauptbrennkammer (16) vermischt werden.

3. Verfahren nach Anspruch 2, wobei:
das homogene Luft-Gaskraftstoffgemisch ein Verbrennungsluftverhältnis (λ) ≥ 2 und/oder ≤ 3 aufweist, sodass vorzugsweise eine Selbstzündung des Luft-Gaskraftstoffgemischs in der Hauptbrennkammer (16) verhindert wird; und/oder
das homogene Luft-Gaskraftstoffgemisch ein Verbrennungsluftverhältnis aufweist, das zu keiner Selbstzündung des Luft-Gaskraftstoffgemischs in der Hauptbrennkammer (16) führt.

4. Verfahren nach einem der vorherigen Ansprüche, ferner aufweisend:
Verdichten eines Teils des Luft-Gaskraftstoffgemischs aus der Hauptbrennkammer (16) in die Vorkammer (22) hinein während der Bewegung des Kolbens (18) zu dem oberen Totpunkt, vorzugsweise nach dem Zuführen der Hauptmenge von Gaskraftstoff,
wobei die Zündmenge in den Teil des in die Vorkammer (22) hineinverdichteten Luft-Gaskraftstoffgemischs zugeführt wird.

5. Verfahren nach einem der vorherigen Ansprüche, wobei:
das fettere Luft-Gaskraftstoffgemisch in der Vorkammer (22) ein Verbrennungsluftverhältnis (λ) zwischen 0.8 und 1.5, vorzugsweise von ca. 1, aufweist, sodass vorzugsweise eine Selbstzündung des fetteren Luft-Gaskraftstoffgemischs in der Vorkammer (22) ermöglicht wird; und/oder
das fettere Luft-Gaskraftstoffgemisch in der Vorkammer (22) ein Verbrennungsluftverhältnis (λ) aufweist, das zu einer Selbstzündung des fetteren Luft-Gaskraftstoffgemischs in der Vorkammer (22) führt.

6. Verfahren nach einem der vorherigen Ansprüche, wobei:
die Hauptmenge von Gaskraftstoff und die Zündmenge von Gaskraftstoff sich auf 100 % einer pro Verbrennungszyklus insgesamt zugeführten Gaskraftstoffmenge summieren.

7. Verfahren nach einem der vorherigen Ansprüche, wobei:
ein effektiver Mitteldruck des Verfahrens ≤ 10 bar, vorzugsweise ≤ 9 bar, besonders bevorzugt ≤ 8 bar, ist, sodass vorzugsweise eine Selbstzündung des Luft-Gaskraftstoffgemischs in der Hauptbrennkammer (16) verhindert wird; und/oder
ein effektiver Mitteldruck des Verfahrens so ist, dass er zu keiner Selbstzündung des Luft-Gaskraftstoffgemischs in der Hauptbrennkammer (16) führt.

8. Verfahren nach einem der vorherigen Ansprüche, wobei:
die Zündmenge von Gaskraftstoff im Bereich des oberen Totpunkts der Kolbenbewegung zugeführt wird, vorzugsweise kurz vor Erreichen des oberen Totpunkts und/oder in einem Bereich zwischen 50 °KW und 0°KW, vorzugsweise zwischen 30°KW und 15°KW, vor dem oberen Totpunkt.

9. Verfahren nach einem der vorherigen Ansprüche, wobei:
die Hauptmenge und die Zündmenge den gleichen Gaskraftstoff, vorzugsweise Methan oder Erdgas, aufweisen; und/oder
die Hauptmenge von Gaskraftstoff während eines Einlasstaktes und/oder eines Verdichtungstaktes zugeführt wird, vorzugsweise bis maximal 100°KW vor dem oberen Totpunkt; und/oder
das Verfahren ferner ein Zuführen von Luft, in die Hauptbrennkammer (16) aufweist, vorzugsweise während eines Einlasstaktes.

10. Verfahren nach einem der vorherigen Ansprüche, wobei:
das Zuführen der Zündmenge und/oder das Zuführen der Hauptmenge gasförmig erfolgt; und/oder
das Zuführen der Hauptmenge zeitlich vor und beabstandet zu dem Zuführen der Zündmenge erfolgt; und/oder
das Zuführen der Zündmenge und das Zuführen der Hauptmenge durch denselben Kraftstoffinjektor (20) erfolgt, vorzugsweise durch dieselbe Zufuhrleitung desselben Kraftstoffinjektors (20); und/oder
das Zuführen der Zündmenge und das Zuführen der Hauptmenge mit demselben Zufuhrdruck erfolgen.

11. Verfahren nach einem der vorherigen Ansprüche, wobei:
das Zuführen der Zündmenge und/oder das Zuführen der Hauptmenge durch einen Piezo-Kraftstoffinjektor (20) erfolgt; oder
das Zuführen der Pilotmenge und/oder das Zuführen der Hauptmenge durch einen mittels eines Elektromagneten betätigten Kraftstoffinjektor (20) erfolgt.

12. Verfahren nach einem der vorherigen Ansprüche, wobei:
eine Innenseitenfläche der Vorkammer (22) einen thermischen Isolator (40) aufweist, vorzugsweise in Form einer thermisch isolierenden Beschichtung.

13. Verfahren nach einem der vorherigen Ansprüche, wobei:
der Schritt des Selbstzündens des Luft-Gaskraftstoffgemischs in der Vorkammer (22) während eines Normalbetriebs der Brennkraftmaschine (10) durchgeführt wird; und
das Verfahren ferner aufweist:
- Fremdzünden des Luft-Gaskraftstoffgemischs in der Vorkammer (22) durch eine Zündkerze bei einem Kaltstart der Brennkraftmaschine (10); oder
- Vorheizen der Vorkammer (22) durch eine Glühkerze und Selbstzünden der des Luft-Gaskraftstoffgemisch in der vorgeheizten Vorkammer (22) bei einem Kaltstart der Brennkraftmaschine (10).

14. Verfahren nach einem der vorherigen Ansprüche, wobei:
die Vorkammer (22) ein Volumen in einem Bereich zwischen 0,5 cm³ und 2 cm³ aufweist; und/oder
die Vorkammer (22) durch mehrere Durchgangsöffnungen, vorzugweise 6 bis 14 verteilt angeordnete Durchgangsöffnungen, mit der Hauptbrennkammer (16) verbunden ist; und/oder
die Vorkammer (22) in einem Kraftstoffinjektor (20) für die Zündmenge und die Hauptmenge integriert ist, oder die Vorkammer (22) separat zu einem Kraftstoffinjektor (20) für die Zündmenge und
die Hauptmenge ausgebildet ist; und/oder
die Vorkammer (22) zentral bezüglich der Hauptbrennkammer (16) angeordnet ist.

15. Brennkraftmaschine (10) oder Kraftfahrzeug, vorzugsweise Nutzfahrzeug, mit einer Brennkraftmaschine (10), wobei die Brennkraftmaschine (10) zum Ausführen eines Verfahrens nach einem der vorherigen Ansprüche ausgeführt ist.

## Claims

1. A method for operating an internal combustion engine (10), preferably a single-fuel internal combustion engine, having a main combustion chamber (16) and a prechamber (22) which are connected in fluid terms, wherein the method involves:
supplying a main quantity of gas fuel, preferably methane or natural gas, into the main combustion chamber (16) via the prechamber (22);
compressing and mixing air and the main quantity of gas fuel to form an air/gas fuel admixture during a movement of a piston (18) in the main combustion chamber (16) to a top dead center of a piston movement of the piston (18);
supplying an ignition quantity of gas fuel, preferably methane or natural gas, into the prechamber (22), before the piston (18) reaches the top dead center in order to form in the prechamber (22) an air/gas fuel admixture which is richer than in the main combustion chamber (16), wherein the main quantity of gas fuel corresponds to between 90% and 98% of a gas fuel quantity supplied in total per combustion cycle and the ignition quantity of gas fuel corresponds to between 2% and 10% of a gas fuel quantity supplied in total per combustion cycle;
self-igniting the air/gas fuel admixture in the prechamber (22); and
igniting the air/gas fuel admixture in the main combustion chamber (22) by the selfignited air/gas fuel admixture in the prechamber (22).

2. The method as claimed in claim 1, wherein:
the air and the main quantity of gas fuel are mixed during the compression to form a homogeneous air/fuel admixture in the main combustion chamber (16).

3. The method as claimed in claim 2, wherein:
the homogeneous air/gas fuel admixture has a combustion air ratio (λ) ≥ 2 and/or ≤ 3 so that a self-ignition of the air/gas fuel admixture in the main combustion chamber (16) is preferably prevented; and/or
the homogeneous air/gas fuel admixture has a combustion air ratio which does not lead to self-ignition of the air/gas fuel admixture in the main combustion chamber (16).

4. The method as claimed in one of the preceding claims, further comprising:
compressing a portion of the air/gas fuel admixture from the main combustion chamber (16) into the prechamber (22) during the movement of the piston (18) to the top dead center, preferably after the main quantity of gas fuel has been supplied,
wherein the ignition quantity is supplied into the portion of the air/gas fuel admixture which is compressed into the prechamber (22).

5. The method as claimed in one of the preceding claims, wherein:
the richer air/gas fuel admixture in the prechamber (22) has a combustion air ratio (λ) between 0.8 and 1.5, preferably of approximately 1, so that a self-ignition of the richer air/gas fuel admixture in the prechamber (22) is preferably enabled; and/or
the richer air/gas fuel admixture in the prechamber (22) has a combustion air ratio (λ) which leads to a self-ignition of the richer air/gas fuel supply in the prechamber (22).

6. The method as claimed in one of the preceding claims, wherein:
the main quantity of gas fuel and the ignition quantity of gas fuel amount to 100% of a gas fuel quantity supplied in total per combustion cycle.

7. The method as claimed in one of the preceding claims, wherein:
an effective mean pressure of the method is ≤ 10 bar, preferably ≤ 9 bar, in a particularly preferred manner ≤ 8 bar, so that a self-ignition of the air/gas fuel admixture in the main combustion chamber (16) is preferably prevented; and/or
an effective mean pressure of the method is such that it does not lead to a self-ignition of the air/gas fuel admixture in the main combustion chamber (16).

8. The method as claimed in one of the preceding claims, wherein:
the ignition quantity of gas fuel is supplied in the region of the top dead center of the piston movement, preferably shortly before reaching the top dead center and/or in a range between 50°KW and 0°KW, preferably between 30°KW and 15°KW, before the top dead center.

9. The method as claimed in one of the preceding claims, wherein:
the main quantity and the ignition quantity have the same gas fuel, preferably methane or natural gas; and/or
the main quantity of gas fuel is supplied during an inlet cycle and/or a compression cycle, preferably up to a maximum of 100°KW before the top dead center; and/or
the method further comprises supplying air into the main combustion chamber (16), preferably during an inlet cycle.

10. The method as claimed in one of the preceding claims, wherein:
the supply of the ignition quantity and/or the supply of the main quantity is carried out in a gaseous manner; and/or
the supply of the main quantity is carried out temporally before and spaced apart from the supply of the ignition quantity; and/or
the supply of the ignition quantity and the supply of the main quantity are carried out by the same fuel injector (20), preferably by the same supply line of the same fuel injector (20); and/or
the supply of the ignition quantity and the supply of the main quantity are carried out at the same supply pressure.

11. The method as claimed in one of the preceding claims, wherein:
the supply of the ignition quantity and/or the supply of the main quantity is/are carried out by means of a piezo fuel injector (20); or
the supply of the pilot quantity and/or the supply of the main quantity is/are carried out by a fuel injector (20) which is activated by means of an electromagnet.

12. The method as claimed in one of the preceding claims, wherein:
an inner side face of the prechamber (22) has a thermal insulator (40), preferably in the form of a thermally insulating coating.

13. The method as claimed in one of the preceding claims, wherein:
the step of self-ignition of the air/gas fuel admixture in the prechamber (22) is carried out during normal operation of the internal combustion engine (10); and
the method further comprises:
- remote ignition of the air/gas fuel admixture in the prechamber (22) by means of a spark plug in the case of a cold start of the internal combustion engine (10); or
- preheating the prechamber (22) by means of a glow plug and self-ignition of the air/gas fuel admixture in the preheated prechamber (22) in the case of a cold start of the internal combustion engine (10).

14. The method as claimed in one of the preceding claims, wherein:
the prechamber (22) has a volume in a range between 0.5 cm³ and 2 cm³; and/or
the prechamber (22) is connected to the main combustion chamber (16) by means of a plurality of through-openings, preferably from 6 to 14 through-openings which are arranged in a distributed manner; and/or
the prechamber (22) is integrated in a fuel injector (20) for the ignition quantity and the main quantity or the prechamber (22) is constructed separately from a fuel injector (20) for the ignition quantity and the main quantity; and/or
the prechamber (22) is arranged centrally with respect to the main combustion chamber (16).

15. An internal combustion engine (10) or motor vehicle, preferably utility vehicle, having an internal combustion engine (10), wherein the internal combustion engine (10) is configured to carry out a method as claimed in one of the preceding claims.

## Revendications

1. Procédé pour faire fonctionner un moteur à combustion interne (10), de préférence un moteur à combustion interne monocarburant, comportant une chambre de combustion principale (16) et une préchambre (22), qui sont en communication fluidique, le procédé comportant :
amenée d'une quantité principale de carburant gazeux, de préférence de méthane ou de gaz naturel, dans la chambre de combustion principale (16) par la préchambre (22) ;
compression et mélange de l'air et de la quantité principale de carburant gazeux en un mélange air-carburant gazeux pendant un mouvement d'un piston (18) dans la chambre de combustion principale (16) jusqu'à un point mort haut d'un mouvement de piston du piston (18) ;
amenée d'une quantité d'allumage de carburant gazeux, de préférence de méthane ou de gaz naturel, dans la préchambre (22) avant que le piston (18) n'atteigne le point mort haut pour former un mélange air-carburant gazeux dans la préchambre (22) qui est plus riche que dans la chambre de combustion principale (16), la quantité principale de carburant gazeux correspondant à entre 90 % et 98 % d'une quantité de carburant gazeux amenée au total par cycle de combustion et la quantité d'allumage du carburant gazeux correspondant à entre 2 % et 10 % de la quantité de carburant gazeux amenée au total par cycle de combustion ;
auto-allumage du mélange air-carburant gazeux dans la préchambre (22) ; et
allumage du mélange air-carburant gazeux dans la chambre de combustion principale (16) par le mélange air-carburant gazeux auto-allumé dans la préchambre (22).

2. Procédé selon la revendication 1 :
l'air et la quantité principale de carburant gazeux étant mélangés pendant la compression pour former un mélange air-carburant homogène dans la chambre de combustion principale (16).

3. Procédé selon la revendication 2 :
le mélange air-carburant gazeux homogène présentant un rapport d'air de combustion (λ) ≥ 2 et/ou ≤ 3, si bien que, de préférence, un auto-allumage du mélange air-carburant gazeux dans la chambre de combustion principale (16) est empêché ; et/ou
le mélange air-carburant gazeux homogène présentant un rapport d'air de combustion qui ne conduit pas à un auto-allumage du mélange air-carburant gazeux dans la chambre de combustion principale (16).

4. Procédé selon l'une des revendications précédentes, comportant en outre :
compression d'une partie du mélange air-carburant gazeux de la chambre de combustion principale (16) dans la préchambre (22) pendant le déplacement du piston (18) jusqu'au point mort haut, de préférence après l'amenée de la quantité principale de carburant gazeux,
la quantité d'allumage étant amenée dans la partie du mélange air-carburant gazeux comprimé à l'intérieur de la préchambre (22).

5. Procédé selon l'une des revendications précédentes :
le mélange air-carburant gazeux plus riche dans la préchambre (22) présentant un rapport d'air de combustion (λ) compris entre 0,8 et 1,5, de préférence d'environ 1, si bien que de préférence un auto-allumage du mélange air-carburant gazeux plus riche dans la préchambre (22) est rendu possible ; et/ou
le mélange air-carburant gazeux plus riche dans la préchambre (22) présentant un rapport d'air de combustion (λ) qui conduit à un auto-allumage du mélange air-carburant gazeux plus riche dans la préchambre (22).

6. Procédé selon l'une des revendications précédentes :
la quantité principale du carburant gazeux et la quantité d'allumage du carburant gazeux représentant jusqu'à 100 % d'une quantité de carburant gazeux amenée au total par cycle de combustion.

7. Procédé selon l'une des revendications précédentes :
une pression moyenne effective du procédé étant ≤ 10 bar, de préférence ≤ 9 bar, de manière particulièrement préférée ≤ 8 bar, si bien que de préférence un auto-allumage du mélange air-carburant gazeux dans la chambre de combustion principale (16) est empêché ; et/ou
une pression moyenne effective du procédé étant telle qu'elle ne conduit pas à un auto-allumage du mélange air-carburant gazeux dans la chambre de combustion principale (16).

8. Procédé selon l'une des revendications précédentes :
la quantité d'allumage du carburant gazeux étant amenée dans la zone du point mort haut du mouvement du piston, de préférence peu avant que le point mort haut ne soit atteint et/ou dans une plage comprise entre 50 °KW et 0 °KW, de préférence entre 30 °KW et 15 °KW, avant le point mort haut.

9. Procédé selon l'une des revendications précédentes :
la quantité principale et la quantité d'allumage comportant le même carburant gazeux, de préférence du méthane ou du gaz naturel ; et/ou
la quantité principale de carburant gazeux étant amenée pendant un cycle d'admission et/ou un cycle de compression, de préférence jusqu'à un maximum de 100 °KW avant le point mort haut ; et/ou
le procédé comportant en outre une amenée d'air dans la chambre de combustion principale (16), de préférence pendant un cycle d'admission.

10. Procédé selon l'une des revendications précédentes :
l'amenée de la quantité d'allumage et/ou l'amenée de la quantité principale se faisant sous forme gazeuse ; et/ou l'amenée de la quantité principale se faisant dans le temps avant et à distance de l'amenée de la quantité d'allumage ; et/ou
l'amenée de la quantité d'allumage et l'amenée de la quantité principale se faisant par le même injecteur de carburant (20), de préférence par la même conduite d'amenée du même injecteur de carburant (20) ; et/ou
l'amenée de la quantité d'allumage et l'amenée de la quantité principale se faisant à la même pression d'amenée.

11. Procédé selon l'une des revendications précédentes :
l'amenée de la quantité d'allumage et/ou l'amenée de la quantité principale se faisant par un injecteur de carburant piézoélectrique (20) ; ou
l'amenée de la quantité pilote et/ou l'amenée de la quantité principale se faisant par un injecteur de carburant (20) actionné au moyen d'un électroaimant.

12. Procédé selon l'une des revendications précédentes :
une surface latérale intérieure de la préchambre (22) comportant un isolant thermique (40), de préférence sous la forme d'un revêtement isolant thermique.

13. Procédé selon l'une des revendications précédentes :
l'étape d'auto-allumage du mélange air-carburant gazeux dans la préchambre (22) étant effectuée pendant un fonctionnement normal du moteur à combustion interne (10) ; et
le procédé comportant en outre :
- allumage externe du mélange air-carburant gazeux dans la préchambre (22) par une bougie d'allumage en cas d'un démarrage à froid du moteur à combustion interne (10) ; ou
- préchauffage de la préchambre (22) par une bougie de préchauffage et auto-allumage du mélange air-carburant gazeux dans la préchambre (22) préchauffée en cas d'un démarrage à froid du moteur à combustion interne (10).

14. Procédé selon l'une des revendications précédentes :
la préchambre (22)présentant un volume dans une plage entre 0,5 cm³ et 2 cm³ ; et/ou
la préchambre (22) étant reliée à la chambre de combustion principale (16) par plusieurs ouvertures de passage, de préférence de 6 à 14 ouvertures de passage réparties ; et/ou
la préchambre (22) étant intégrée dans un injecteur de carburant (20) pour la quantité d'allumage et la quantité principale, ou la préchambre (22) étant formée séparément d'un injecteur de carburant (20) pour la quantité d'allumage et la quantité principale ; et/ou
la préchambre (22) étant disposée de manière centrale par rapport à la chambre de combustion principale (16).

15. Moteur à combustion interne (10) ou véhicule à moteur, de préférence véhicule utilitaire, avec un moteur à combustion interne (10), le moteur à combustion interne (10) étant réalisé pour exécuter un procédé selon l'une des revendications précédentes.
